# EUROPEAN PATENT APPLICATION

(11) **EP 1 452 313 A1**
(43) Date of publication of application: **01.09.2004**
(21) Application number: 02786020.4
(22) Date of filing: 03.12.2002
(51) Int. Cl.: B41J 2/01

(54) **IMAGE RECORDING APPARATUS**

(30) Priority: 03.12.2001 JP 2001368939
(71) Applicant: Olympus Corporation, Tokyo 151-0072 (JP)
(72) Inventor: EBIHARA, Toshiyuki, Hino-shi, Tokyo 191-0011 (JP)
(74) Representative: von Hellfeld, Axel, Dr. Dipl.-Phys.
(86) International application number: PCT/JP2002/012639
(87) International publication number: WO 2003/047867

(57) **Abstract**

There is disclosed an image recording apparatus comprising a density unevenness correction section which corrects density unevenness of input image data, a dividing line shape data generation section which produces dividing line shape data to divide the image data subjected to density unevenness correction into a plurality of partial images, an image dividing section which divides the image data into a plurality of partial images based on the dividing line shape data produced in the dividing line shape data generation section, and a recording section comprising a plurality of recording heads to record the respective partial images output from the image dividing section, so that it is possible to avoid image quality degradation by a conspicuous joint of the image.

## Description

### Technical Field

The present invention relates to image recording apparatuses such as a printer, facsimile machine, and copier, particularly to an image recording apparatus in which a recording width is increased using a plurality of recording heads.

### Background Art

An image recording apparatus of a photosensitive recording system, thermal transfer recording system, ink jet recording system or the like has been used in image recording apparatuses such as a printer and a copying machine. A recording head in which a large number of recording devices for printing dots are linearly arranged at equal intervals is used in these recording systems.

Preparation of the recording head having a large recording length has a problem in that yield becomes worse and cost increases with a larger length, and it has been proposed that a recording width be extended using a large number of recording heads having a recording length shorter than a recording width. For example, in Jpn. Pat. Appln. KOKAI Publication No. 6-255175, a method has been described in which a plurality of recording heads are linearly arranged in such a manner that end portions of the heads overlap with one another to a certain degree. A position from which the recording head is to be switched is irregularly set for each scanning line with respect to a region where the recording devices are redundant, so that joints become inconspicuous and the recording heads are easily arranged.

However, in a conventional art, there has been a problem that density of a recorded image sometimes becomes higher or lower than a predetermined density in the joints of the recording heads depending on the arranged state of the recording heads, degrading the quality of the image.

### Disclosure of Invention

An object of the present invention is to provide an image recording apparatus which can avoid image degradation because of conspicuous joints of images.

According to a first aspect of the present invention, there is provided an image recording apparatus comprising: a dividing line shape data generation section which produces dividing line shape data to divide input image data into a plurality of partial images; an image dividing section which divides the image data into a plurality of partial images based on the dividing line shape data produced in the dividing line shape data generation section; a density unevenness correction section which corrects density of the image data corresponding to divided portions produced by a dividing process in the image dividing section; and a recording section comprising a plurality of recording heads to record the respective partial images divided in the image dividing section. This constitution corresponds to a first embodiment described later.

Moreover, an image recording apparatus according to a second aspect of the present invention relates to the image recording apparatus according to the first aspect of the present invention, and the dividing line shape data output from the dividing line shape data generation section has a shape obtained by regularly moving a dividing position of the image data every line or every plurality of lines. This constitution corresponds to the first embodiment described later.

Furthermore, an image recording apparatus according to a third aspect of the present invention relates to the image recording apparatus according to the first aspect of the present invention, and the dividing line shape data output from the dividing line shape data generation section has a shape obtained by irregularly moving a dividing position of the image data every line or every plurality of lines. This constitution corresponds to the first embodiment described later.

Additionally, an image recording apparatus according to a fourth aspect of the present invention relates to the image recording apparatus according to the second or third aspect of the present invention, and distribution of the dividing positions of the image data has a large distribution in a middle of a distribution range. This constitution corresponds to the first embodiment described later.

Moreover, an image recording apparatus according to a fifth aspect of the present invention relates to the image recording apparatus according to the second or third aspect of the present invention, and a maximum value of a difference of a line direction of the dividing position of the image data between adjacent lines is set to be not more than a predetermined value which is smaller than a width of a distribution range of the dividing positions of the image data. This constitution corresponds to the first embodiment described later.

Furthermore, an image recording apparatus according to a sixth aspect of the present invention relates to the image recording apparatus according to the first aspect of the present invention, and the dividing line shape data generation section includes a storage device capable of storing the dividing line shape data. This constitution corresponds to the first embodiment described later.

Additionally, an image recording apparatus according to a seventh aspect of the present invention relates to the image recording apparatus according to the sixth aspect of the present invention, and the storage device is capable of rewriting the data. This constitution corresponds to the first embodiment described later.

Moreover, an image recording apparatus according to an eighth aspect of the present invention relates to the image recording apparatus according to the first aspect of the present invention, and the dividing line shape data generation section produces the dividing line shape data by a function or program. This constitution corresponds to the first embodiment described later.

Furthermore, an image recording apparatus according to a ninth aspect of the present invention relates to the image recording apparatus according to the first aspect of the present invention, the recording section records data in multiple colors, and the dividing line shape data generation section produces the dividing line shape data which differs with each color. This constitution corresponds to the first embodiment described later.

Additionally, an image recording apparatus according to a tenth aspect of the present invention relates to the image recording apparatus according to the ninth aspect of the present invention, and the dividing line shape data is produced in such a manner that the dividing positions of the image data are not matched between colors in all lines. This constitution corresponds to the first embodiment described later.

Moreover, an image recording apparatus according to an eleventh aspect of the present invention relates to the image recording apparatus according to the first aspect of the present invention, and the dividing line shape data generation section is capable of producing a plurality of different dividing line shape data, and comprises a dividing line shape data selection section to select the produced dividing line shape data. This constitution corresponds to a second embodiment described later.

Furthermore, an image recording apparatus according to a twelfth aspect of the present invention relates to the image recording apparatus according to the eleventh aspect of the present invention, and the dividing line shape data selection section selects the dividing line shape data in accordance with a type of an input image. This constitution corresponds to the second embodiment described later.

Additionally, an image recording apparatus according to a thirteenth aspect of the present invention relates to the image recording apparatus according to the eleventh aspect of the present invention, and the dividing line shape data selection section selects the dividing line shape data in accordance with a type of ink for use. This constitution corresponds to the second embodiment described later.

Moreover, an image recording apparatus according to a fourteenth aspect of the present invention relates to the image recording apparatus according to the eleventh aspect of the present invention, and the dividing line shape data selection section selects the dividing line shape data in accordance with a type of a recording medium for use. This constitution corresponds to the second embodiment described later.

Furthermore, an image recording apparatus according to a fifteenth aspect of the present invention relates to the image recording apparatus according to the eleventh aspect of the present invention, and the dividing line shape data selection section selects the dividing line shape data in accordance with an image recording speed. This constitution corresponds to the second embodiment described later.

Additionally, an image recording apparatus according to a sixteenth aspect of the present invention relates to the image recording apparatus according to the first aspect of the present invention, and the density unevenness correction section controls on/off of a recording dot existing in a position contacting a dividing line to correct density unevenness of an image generated in a position corresponding to a joint of the recording heads so that a uniform density is obtained. This constitution corresponds to a third embodiment described later.

Moreover, an image recording apparatus according to a seventeenth aspect of the present invention relates to the image recording apparatus according to the first aspect of the present invention, and the density unevenness correction section includes a density unevenness correction amount storage section in which a correction amount of a density unevenness of an image generated in a position corresponding to a joint of the recording head is stored for various values of a phase difference of a recording device between two adjacent recording heads, refers to the correction amount stored in the density unevenness correction amount storage section, and acquires a density correction amount in accordance with an actually obtained phase difference to correct the density unevenness. This constitution corresponds to the third embodiment described later.

Furthermore, an image recording apparatus according to an eighteenth aspect of the present invention relates to the image recording apparatus according to the seventeenth aspect of the present invention, and includes a phase difference detection section which detects the phase difference of the recording device between two adjacent recording heads. This constitution corresponds to the third embodiment described later.

Moreover, according to a nineteenth aspect of the present invention, there is provided an image recording apparatus which controls the number of ink drops for use in forming recording dots so that gradation representation is possible for each recording dot, comprising: an image data storage section in which an image of each ink drop discharge for the gradation representation is stored; an image dividing line shape data storage section in which a plurality of different image dividing line shape data are stored; an image dividing line shape data selection section which selects one of the image dividing line shape data stored in the image dividing line shape data storage section in accordance with the number of image drops for the image stored in the image data storage section during forming of the recording dots; an image dividing section which divides image data stored in the image data storage section by the number of recording heads in accordance with the selected image dividing line shape data; and a recording section comprising a plurality of recording heads to record the image data divided in the image dividing section. The constitution corresponds to a fourth embodiment described later.

Furthermore, an image recording apparatus according to a twentieth aspect of the present invention relates to the image recording apparatus according to any one of the first to sixteenth aspects of the present invention, and comprises: a printing section which prints a test pattern for density unevenness correction measurement; a reading section which reads density of the test pattern printed in the printing section; and a calculation section which calculates density unevenness correction amount based on the density of the test pattern read in the reading section. This constitution corresponds to the second embodiment described later.

### Brief Description of Drawings

FIG. 1 is a block diagram showing a first embodiment of the present invention;
FIG. 2 is a schematic diagram showing a positional relationship between a recording head and a recording medium;
FIGS. 3A to 3C are diagrams showing a first example of dividing line shape data;
FIGS. 4A to 4C are diagrams showing a second example of the dividing line shape data;
FIGS. 5A to 5C are diagrams showing a positional relationship between two adjacent recording heads;
FIGS. 6A, 6B are diagrams showing an arrangement of dots formed on a recording medium in the vicinity of a joint;
FIGS. 7A, 7B are diagrams showing a distribution of positions where a dividing line divides an image along a line direction in the vicinity of a joint between the images;
FIGS. 8A, 8B are explanatory views of a method of suppressing an image quality degraded by wrong correction in a case where the distribution is uniform;
FIGS. 9A, 9B are explanatory views of a correction method of a density unevenness;
FIGS. 10A, 10B are diagrams showing a joint of the image in a case where deviation occurs in a recording timing;
FIG. 11 is a diagram showing a method of dividing the image data in a case where an image is formed in ink of two colors with respect to a partial image in the vicinity of the joint;
FIG. 12 is a block diagram showing a second embodiment of the present invention;
FIG. 13 is a block diagram showing a third embodiment of the present invention;
FIG. 14 is a block diagram showing a fourth embodiment of the present invention;
FIG. 15 is an explanatory view of the dividing of the image in an image recording system in which a plurality of ink drops are superimposed to represent gradation; and
FIGS. 16A to 16C are explanatory views of the dividing of the image in the image recording system in which a plurality of ink drops are superimposed to represent the gradation.

### Best Mode for Carrying Out the Invention

### (First Embodiment)

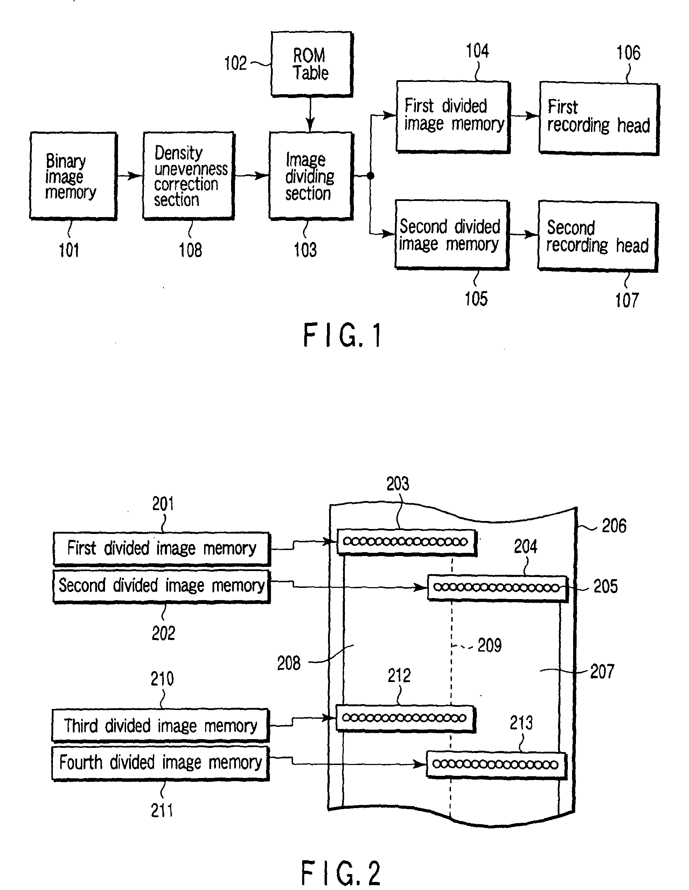

FIG. 1 is a block diagram showing a first embodiment of the present invention. In FIG. 1: reference numeral 101 denotes a binary image memory which holds a binary image input into an image recording apparatus; 102 denotes a ROM table which holds dividing line shape data as a dividing line shape generation section; 103 denotes an image dividing section; 104 denotes a first divided image memory which holds divided images; 105 denotes a second divided image memory which holds the divided images; 106 denotes a first recording head which is a recording section; 107 denotes a second recording head which is a recording section; and 108 denotes a density unevenness correction section. In the binary image, each pixel is capable of taking signal levels in two ways of on (printing) and off (non-printing), and a distribution of on pixels represents shading of the image.

FIG. 2 is a schematic diagram showing a positional relationship between a recording head and a recording medium. In FIG. 2, reference numeral 201 denotes a first divided image memory which holds the divided images, and 202 denotes a second divided image memory which holds the divided images. They correspond to 104, 105 of FIG. 1.

Reference numerals 203, 204 denote recording heads, and correspond to 106, 107 of FIG. 1. A large number of recording devices 205 are linearly arranged in these recording heads 203, 204. These recording devices discharge ink to form recording dots constituting the image in a printer of an ink jet system.

A recording medium 206 moves downward from above during image formation in the embodiment and, as a result, images 207, 208 are formed. The recording heads 203, 204 are arranged in such a manner that a part of a recordable region overlaps. A joint 209 of the formed image is connected so as to be inconspicuous by a process described later. To perform multicolored printing, only a required number of new recording heads, for example, recording heads 212, 213 are added. Reference numeral 210 denotes a divided image memory which holds the image data supplied to the recording head 212, and 211 denotes a divided image memory which holds the image data supplied to the recording head 213.

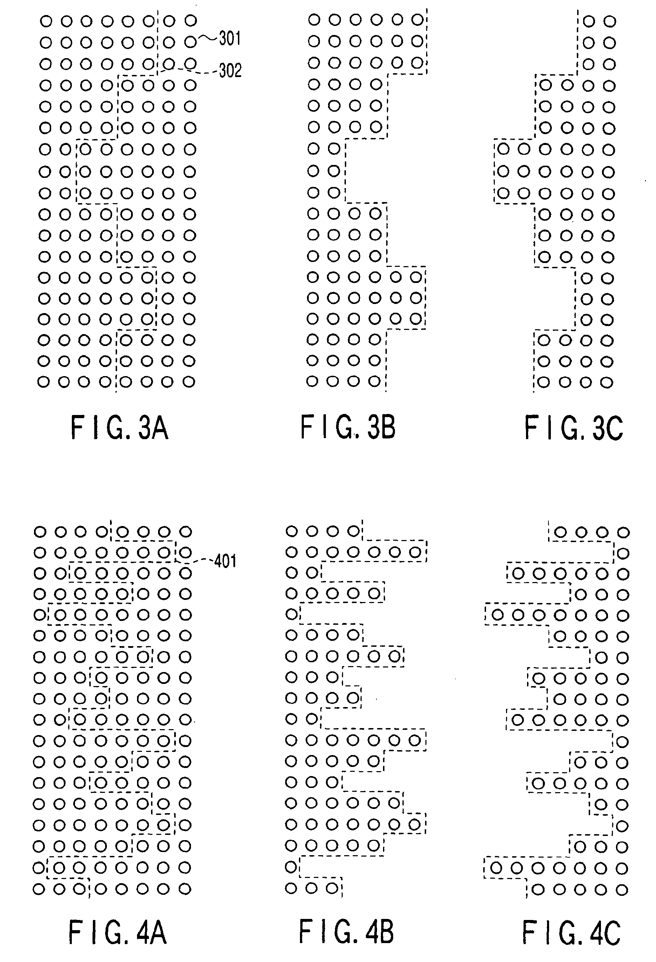

FIG. 3A shows a state in the vicinity including the joint 209 of FIG. 2 in the binary image held by the binary image memory 101 of FIG. 1. Each circle 301 shows the image data for each pixel, and takes either on (printing) or off (non-printing) state. A broken line 302 shows a position of a dividing line represented by the dividing line shape data stored in the ROM table 102 of FIG. 1. The binary image held in the binary image memory 101 of FIG. 1 is subjected to density unevenness correction in the density unevenness correction section 108, and subsequently divided into two binary images along the dividing line shape data stored in the ROM table 102 of FIG. 1 in the image dividing section 103 of FIG. 1.

The divided image data corresponding to a part of the image data shown in FIG. 3A changes as shown in FIGS. 3B, 3C. Two divided binary images are stored in the divided image memories, respectively, as shown by 104, 105 of FIG. 1, and recorded as images on a recording medium by the recording heads, respectively, as shown by 106, 107 of FIG. 1. The dividing line shape data stored beforehand in the ROM table 102 may have a regularly bent line shape as shown by 302 of FIG. 3A, or may also have a shape in which a dividing position irregularly moves for each line as shown by 401 in FIG. 4A.

Additionally, the recording device disposed on the recording head is very finely prepared to form a high-precision image. For example, with the recording head for use in the recording at a resolution of 360 dpi, an interval of the recording device is about 70 µm. To dispose the recording head in a predetermined position, unless the disposed position is finely adjusted, a positional relation of the recording device between two adjacent recording heads is various.

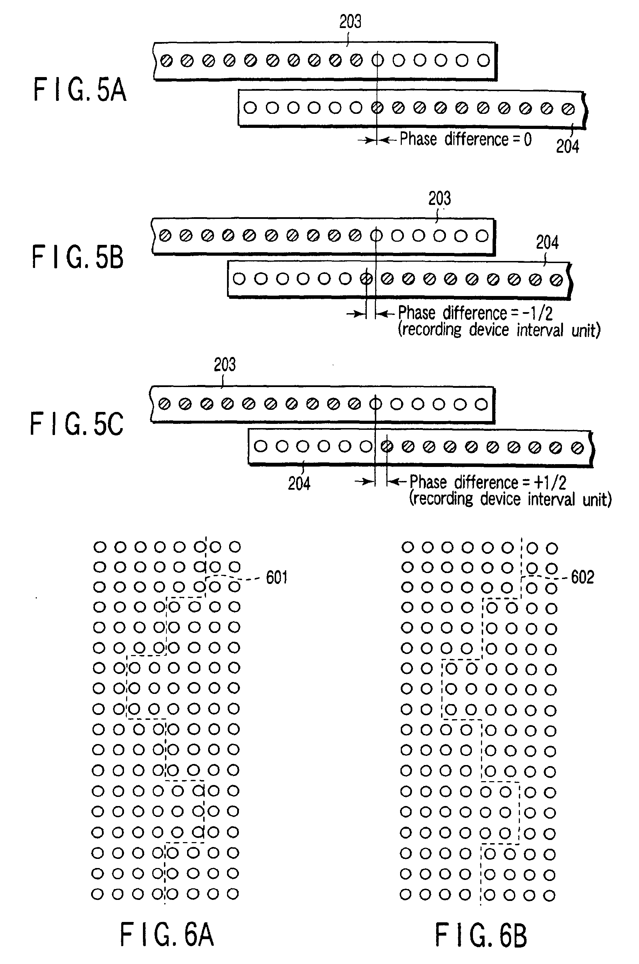

FIG. 5A shows a positional relationship between two adjacent recording heads 203, 204 in a state in which the heads are disposed with a phase difference of 0 between the recording devices. FIG. 5B shows that two recording heads 203, 204 are disposed deviating in an approaching direction by a phase difference of a distance corresponding to 1/2 of a pixel pitch, that is, an interval between the recording devices. Furthermore, FIG. 5C shows that two recording heads 203, 204 are disposed deviating in a departing direction by a distance corresponding to 1/2 of the pixel pitch.

Two states of FIGS. 5B and 5C have a difference for one dot between the positions, but the same phase state. That is, a disturbance of the pitch of the recording dots formed by two recording heads 203, 204 disposed adjacent to each other so that a part of a recordable range overlaps in an image position corresponding to the head joint can be set to ±0.5 dots or in any case.

Additionally, when the interval between the formed recording dots is narrowed in the joint as shown in FIG. 5B, the dots formed on the recording medium in the vicinity of the joint are arranged as shown in FIG. 6A. Reference numeral 601 denotes the position of a dividing line shape. In this case, since a density of recording dots locally rises, the density of the joint rises. As shown in FIG. 5C, when the interval between the formed recording dots is large in the joint, the dots formed on the recording medium in the vicinity of the joint are arranged as shown in FIG. 6B. Reference numeral 602 shows the position of the dividing line shape. In this case, since the density of the recording dots locally drops, the density of the joint drops.

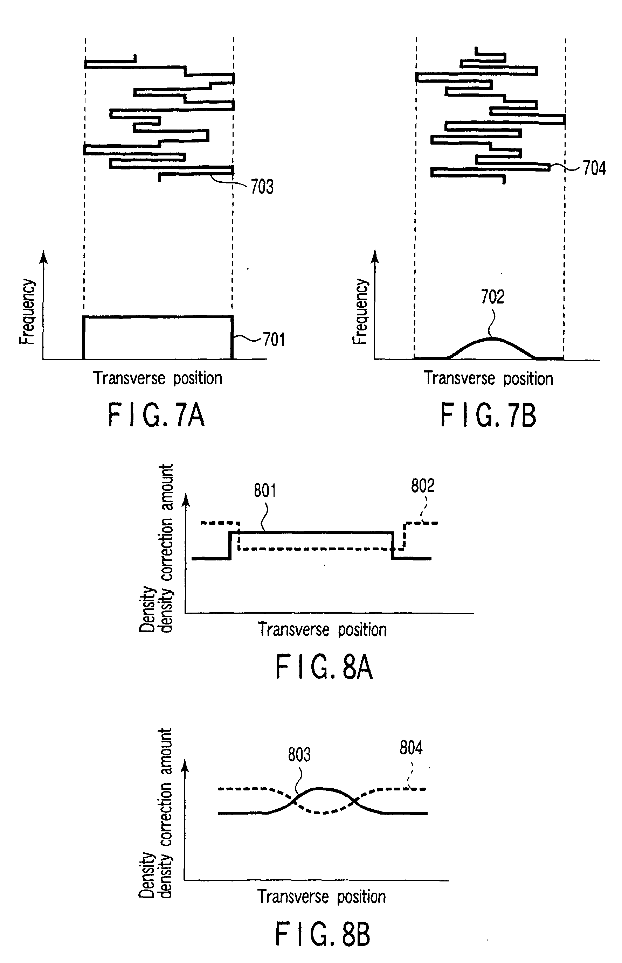

FIGS. 7A, 7B are diagrams showing a distribution of positions where the dividing line divides the image along a line direction in the vicinity of the joint of the image. Reference numerals 703, 704 denote the positions of the dividing lines, and 701, 702 show the distribution of the positions where the image is divided by the dividing lines 703, 704. When the distribution of the positions for the dividing line to divide the line of the image data is uniform as shown by 701 of FIG. 7A, and the density unevenness occurs in the overlapping portion of the recording heads, a boundary between the overlapping portion of the recording heads and another portion clearly appears and becomes conspicuous.

On the other hand, the positions wherein the dividing line divides the line of the image data are distributed a lot in a middle to obtain a distribution shape as shown by 702 of FIG. 7B. Accordingly, since the density unevenness strongly appears in the middle, but gradually disappears away from the middle, the boundary is inconspicuous, and image quality is enhanced.

In an example of a method of preparing density unevenness correction data, the data can be prepared when a pattern for measuring density unevenness is printed and a density corresponding to each position of the recording device is measured. Additionally, since the interval of the recording device is very small, it is difficult to correctly associate the position of density data measured for each recording device, and it is also considered that the density unevenness correction data is prepared in a state in which the corresponding position shifts. When deviations are generated in the positions of actual density unevenness and correction data, and the distribution of the positions where the dividing line shape divides the data of each line is uniform as shown in FIG. 7A, the positional shift of the actual density unevenness does not match that of the correction data in the portion of the end of the distribution, wrong correction is performed, and the image quality is degraded.

FIG. 8A shows this state. In FIG. 8A, 801 schematically shows an average density distribution with respect to a plurality of lines in the image formed from the image data having a uniform value in a state in which the interval between the recording dots is narrowed and the positions of the dividing line dividing the line of the image data are uniformly distributed, and 802 schematically shows the shape of correction data for correcting the density unevenness. However, when the dividing positions are distributed a lot in the middle as shown in FIG. 7B, and even when there is the positional shift between the actual density unevenness and the correction data, the density changes smoothly, and therefore image quality degradation can be suppressed. FIG. 8B shows this state. In the same manner as in FIG. 8A, in FIG. 8B, 803 schematically shows an average density distribution in a case where the positions of the dividing line dividing the line of the image data are distributed a lot in the middle, and 804 schematically shows the shape of the correction data for correcting the density unevenness.

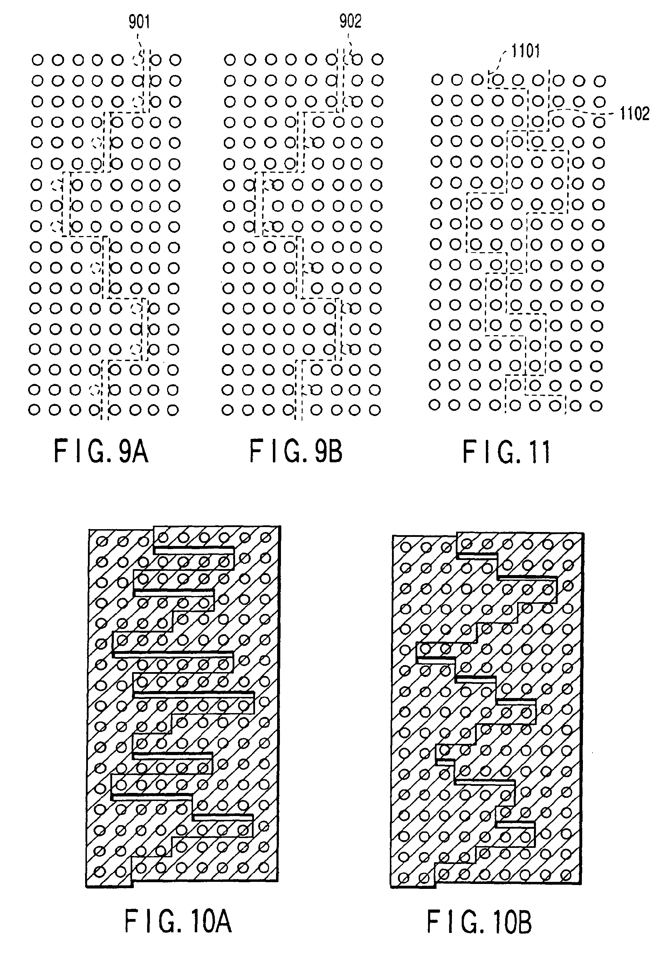

Additionally, when a plurality of recording heads are driven on a moving recording medium to form an image, a recording timing of each recording head is controlled not to cause a printing positional shift in a sheet conveying direction in an image position corresponding to the joint of the recording head. When a certain problem occurs, and the recording timing shifts, a gap is made in a line direction, and the image quality drops. FIG. 10 shows a joint of the image in which each recording dot is formed with spread. For convenience of description, the spread of each recording dot is shown in a rectangle, but in actual, the shape is nearly a circle. As shown in FIG. 10A, when the position of the dividing line dividing the line is largely distant between the adjacent lines, a length of the gap also increases, and a degree of the degradation of the image quality also increases. However, as shown in FIG. 10B, when the position of the dividing line dividing the line differs little, the length of the gap also decreases, and the degradation of the image quality can be suppressed. In the example of FIG. 10B, the difference of the position where the dividing line divides the line between the adjacent lines is regulated to be three dots or less.

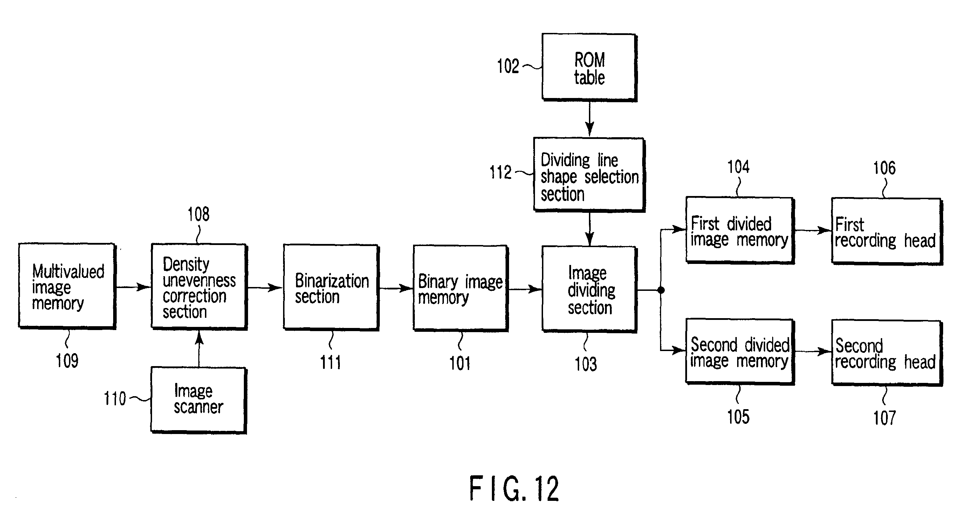

Next, a process will be described in a case where a color image is formed using a plurality of colors of ink. FIG. 11 shows a method of dividing the image data in a case where the image is formed in ink of two colors with respect to a partial image in the vicinity of the joint. Usually, since a size or position of the image data of a first color matches that of a second color, they are superimposed and shown in the figure. In FIG. 11, 1101 shows the position of the dividing line shape of the image data for the first color, and 1102 shows the position of the dividing line shape of the image data for the second color. When a plurality of colors of ink are superimposed in this manner to form the image, the positions of the dividing lines for each color are displaced not to overlap with each other, and accordingly the joint can be set to be further inconspicuous.

### (Second Embodiment)

FIG. 12 is a block diagram showing a second embodiment of the present invention. In FIG. 12, the reference numerals 101 to 107 are the same as those of FIG. 1. Additionally, in the ROM table 102, a plurality of dividing line shape data are held in accordance with various types of recording conditions. In FIG. 12: reference numeral 109 denotes a multivalued image memory which holds an input multivalued image; 108 denotes a density unevenness correction section which corrects density unevenness generated in a formed image; 110 denotes an image scanner which is a density unevenness detection section to extract data required for the density unevenness correction; 111 denotes a binarization section which converts a multivalued image into a binary image; and 112 denotes a dividing line shape selection section which selects a dividing line shape suitable for recording conditions from a plurality of dividing line shape data held in the ROM table 102.

In the embodiment of the present invention, the density unevenness generated in the formed image is formed into data using the image scanner 110, and the image data read from the multivalued image memory 109 by the density unevenness correction section based on the data is subjected to the density unevenness correction, and output to the binarization section 111. The density unevenness is corrected, when a conversion table is disposed for each column of the image to convert the value of the image data.

The binarization section 111 binarizes the image data subjected to the density unevenness correction to output the data to the binary image memory 101. As a method of converting a multivalued image into the binary image, an error diffusion method, dither method or the like is known.

The dividing line shape selection section 112 is capable of inputting conditions concerning the image formation, such as type of image, type of ink, type of recording medium, and printing speed, and a user inputs them in accordance with actual image forming conditions. Moreover, the dividing line shape data most suitable for the input conditions is selected from the ROM table 102, and output to the image dividing section 103.

For example, in the type of the image, an irregular dividing line shape having a large concave/convex width is selected in a photograph or the like in which the joint is comparatively conspicuous. In a character or line image in which the joint is comparatively inconspicuous, a dividing line shape having a small concave/convex width is selected. Then, deformation of the character or line image can be preferably reduced. The type of the ink, the type of the recording medium, the image recording speed and the like are concerned with blur or deformation of a contour of the recording dot. When the contour of the recording dot blurs comparatively little, the joint is easily conspicuous, and therefore the dividing line shape having a large concave/convex width is selected. Conversely, when the contour of the recording dot blurs comparatively largely, the joint is inconspicuous, therefore the dividing line shape having a small concave/convex width is selected, and then the deformation of the image is preferably suppressed.

A combination of various conditions concerning the image formation and the optimum dividing line shape is clarified by an experiment, and the result may be stored beforehand in the ROM table or the like. The conditions concerning the image formation such as the type of the image and the type of the recording medium may also be automatically input using a sensor or the like instead of the input by the user.

### (Third Embodiment)

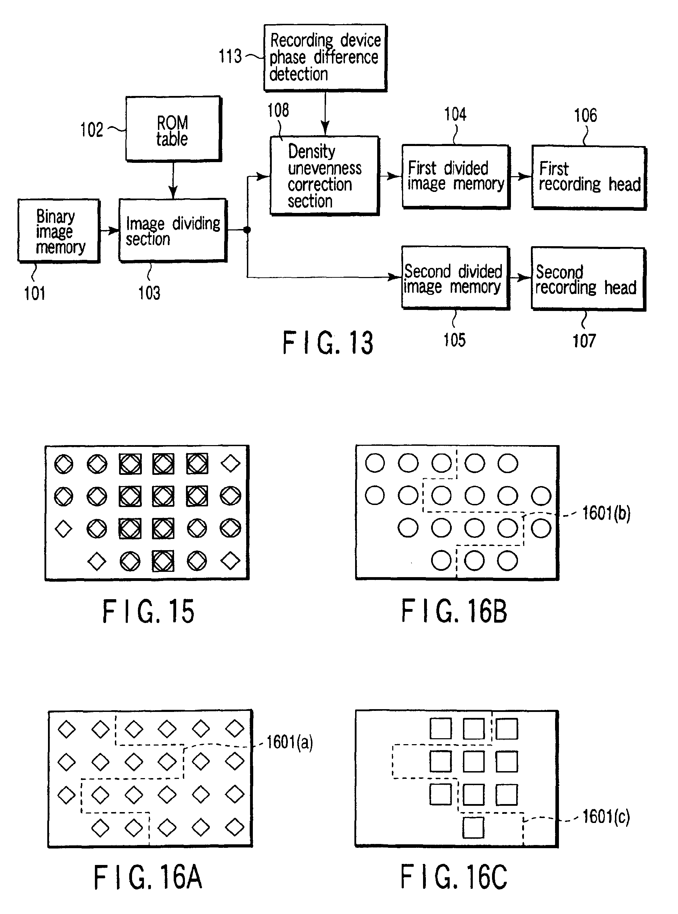

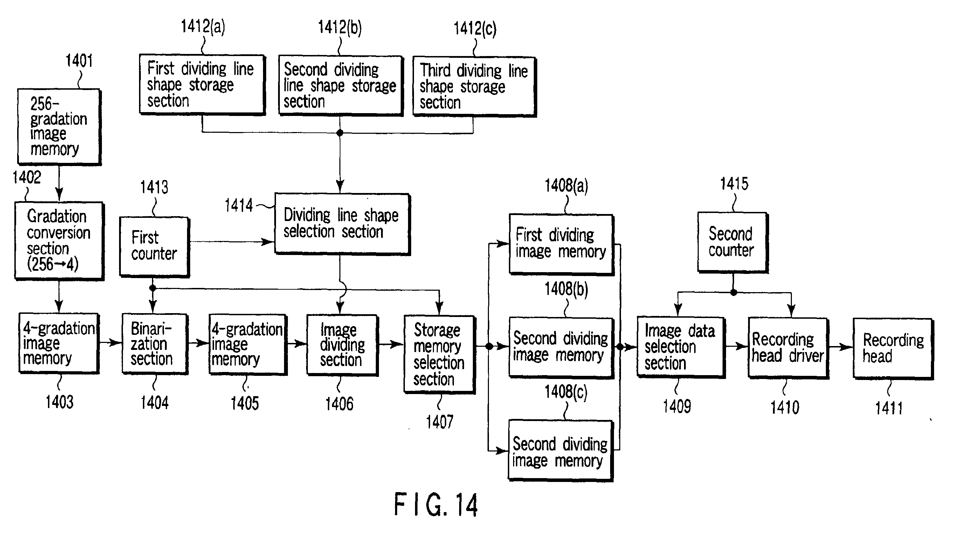

FIG. 13 is a block diagram showing a third embodiment of the present invention. In FIG. 13, the reference numerals 101 to 107 are the same as those of FIG. 1. In FIG. 13, reference numeral 108 denotes a density unevenness correction section, and 113 denotes a recording device phase difference detection section which detects the phase difference of the recording device between two adjacent recording heads.

The recording device phase difference detection section 113 comprises an image scanner, forms a recording pattern for measurement on the same recording medium with two adjacent recording heads, reads the image by this image scanner to digitalize the interval between the recording dots, and accordingly calculates a periodic phase difference of the recording device between two recording heads. As the recording pattern for the measurement, for example, an image which is formed by alternately turning on/off the recording device for each apparatus and which has a stripe pattern or the like is suitable.

The density unevenness correction section 108 adds or removes the recording dots with respect to first divided image data output from the image dividing section in accordance with the value of the phase difference output from the recording device phase difference detection section 113 to correct the density unevenness. As described in the first embodiment of the present invention, when the phase difference of the recording device between two adjacent recording heads is in a state of FIG. 5B from that of FIG. 5A, the dot density locally increases, and the joint seems to be dense. In this case, the density unevenness correction section 108 does not print some of the recording dots in a position contacting the dividing line to correct the density unevenness.

For example, recording dots 901 shown by broken-line circles in FIG. 9A are thinned without being printed to correct the density. The amount of phase difference of the recording device between two adjacent heads and a degree of density unevenness generated in the joint between two heads have a certain relationship. Therefore, when an adequate value of a thinning ratio of the recording dots is checked with respect to various phase difference amounts beforehand once by an experiment, and subsequently an appropriate thinning ratio of the recording dots can be known with respect to a measured phase difference amount.

Moreover, conversely, when the phase difference of the recording device between two adjacent recording heads is in a state of FIG. 5C from that of FIG. 5A, the dot density locally drops, and the density of the joint seems to be small. In this case, the density unevenness correction section 108 adds the recording dots in the position contacting the dividing line to correct the density unevenness. For example, recording dots 902 shown by broken-line circles in FIG. 9B are added. A relation between the phase difference and an optimum value of the ratio of the recording dots to be added is also obtained beforehand by an experiment.

When the recording dots in the position contacting the dividing line are removed or added in this manner to correct the deviation of the density generated in the joint, the density of another portion is not influenced, and therefore the image data can be comparatively faithfully recorded.

It is to be noted that in any of the above-described embodiments of the present invention, two recording heads are used, the number of divided images are set to two, but the number of recording heads or the number of divided images may also be three or more. As the image recording method, a binary recording system has been described in which each recording dot is capable of obtaining only the on or off-state, but a multivalued recording system may also be used in which representation of three or more density gradations is possible for each recording dot.

### (Fourth Embodiment)

FIG. 14 is a block diagram showing a fourth embodiment of the present invention. In FIG. 14: reference numeral 1401 denotes an image memory which holds a 256-gradation input image; 1402 denotes a gradation conversion section which converts a 256-gradation image into a 4-gradation image; 1403 denotes a 4-gradation image memory which stores the 4-gradation image; 1404 denotes a binarization section; 1405 denotes a 2-gradation image memory which stores a 2-gradation image; 1406 denotes an image dividing section which divides the image data by the number of recording heads; 1407 denotes a storage memory selection section which selects a memory to store the divided image; 1408(a) to (c) denote divided image memories which store the divided images; 1409 denotes an image data selection section which selects the image data to be sent to a recording head driver described later; 1410 denotes a recording head driver which controls the recording head; 1411 denotes a recording head; 1412(a) denotes a first dividing line shape storage section which stores the shape of the dividing line in dividing the image; 1412(b) denotes a second dividing line shape storage section which stores the shape of the dividing line in dividing the image; 1412(c) denotes a third dividing line shape storage section which stores the shape of the dividing line in dividing the image; 1413 denotes a first counter which outputs values of 1 to 3 for use in a threshold value of binarization in converting the 4-gradation image into the 2-gradation image; 1414 denotes a dividing line shape selection section which selects the dividing line shape; and 1415 denotes a second counter which outputs values of 1 to 3 for use in selecting the image data for use in the recording.

It is to be noted that in the present invention, the image is divided and recorded by a plurality of recording heads, and a plurality of sets of storage memory selection sections 1407, divided image memories 1408(a) to (c), image data selection sections 1409, recording head drivers 1410, and recording heads 1411 are disposed.

The 256-gradation image data prepared by the user to record the image is stored in the 256-gradation image memory 1401 from a host computer (not shown) or the like. In the image recording apparatus of the embodiment of the present invention, four stages of density gradation representations are performed for each recording dot by four ways of zero to three ink discharges for each recording dot. Therefore, the gradation conversion section 1402 reads 256 gradation data from the 256-gradation image memory 1401, and converts the image into a 4-gradation image in which the values of pixels are integers of 0 to 3 to store the image in the 4-gradation image memory 1403.

In the gradation conversion, an error diffusion method or the like is preferably used in order to suppress the degradation of the image quality. The value of the pixel of the image data stored in the 4-gradation image memory 1403 indicates the number of ink discharges at the time of the forming of the recording dots. That is, the ink discharge is not performed with the pixel having a value of 0, and the ink discharge is performed once to form the recording dot with the pixel having a value of 1. With a value of 2 or 3, the ink discharge is performed twice or three times to form the recording dot.

The binarization section 1404 reads the image stored in the 4-gradation image memory 1403, and binarizes the image using a value of 1 to 3 output from the first counter 1413 as the threshold value to successively produce three images: a 2-gradation image in which only the pixel for performing the ink discharge once or more is set to 1 (ON) and the other pixels are set to 0 (OFF); a 2-gradation image in which only the pixel for performing the ink discharge twice or more is set to 1; and a 2-gradation image in which only the pixel for performing the ink discharge three times is set to 1 in accordance with the operation of the first counter.

Three produced 2-gradation images are successively and temporarily stored in the 2-gradation image memory. The dividing line shape data corresponding to these three images are stored in the first to third dividing line shape storage sections 1412(a) to (c). That is, the dividing line shape data for dividing the 2-gradation image in which only the pixel for performing the ink discharge once or more is set to 1 is stored in the first dividing line shape storage section 1412(a). The dividing line shape data for dividing the 2-gradation image in which only the pixel for performing the ink discharge twice or more is set to 1 is stored in the second dividing line shape storage section 1412(b). The dividing line shape data for dividing the 2-gradation image in which only the pixel for performing the ink discharge three times or more is set to 1 is stored in the third dividing line shape storage section 1412(c).

The dividing line shape selection section 1414 selects one from the first to third dividing line shape storage sections 1412(a) to (c) in accordance with the value of 1 to 3 output from the first counter 1413, and reads the dividing line shape data stored in the section to output the data to the image dividing section 1406. The image dividing section 1406 divides the 2-gradation image stored in the 2-gradation image memory 1405 into the same number of images as that of recording heads in accordance with the dividing line shape data.

The storage memory selection section 1407 stores the image divided by the image dividing section 1406 into any of the first to third divided image memories 1408(a) to (c) in accordance with the value of 1 to 3 output from the first counter 1413.

That is, the image data that has divided the 2-gradation image in which only the pixel for performing the ink discharge once or more is set to 1 is stored in the first divided image memory 1408(a). The image data that has divided the 2-gradation image in which only the pixel for performing the ink discharge twice or more is set to 1 is stored in the second divided image memory 1408(b). The image data that has divided the 2-gradation image in which only the pixel for performing the ink discharge three times is set to 1 is stored in the third divided image memory 1408(c). The second counter 1415 outputs a value of 1 to 3.

The image data selection sections 1409 reads the divided image data from any of the first to third divided image memories 1408(a) to (c) in accordance with the output of the second counter 1415 to send the data to the recording head driver 1410. That is, the divided image data is read from the first divided image memory 1408(a) when an output of the second counter 1415 is 1, from the second divided image memory 1408(b) when an output of the second counter 1415 is 2, and from the third divided image memory 1408(c) when an output of the second counter 1415 is 3.

The recording head driver 1410 drives the recording head 1411 to form the recording dot in a position corresponding the pixel having an image data value of 1 input from the image data selection section 1409. The recording is repeated three times in synchronization with the operation of the second counter 1415, and the recording dot is formed in which ink is superimposed by three ink discharges at maximum.

The dividing of the image will be described in more detail with reference to FIGS. 15, 16A to 16C. These figures show a part of the 4-gradation image stored in the 4-gradation image memory 1403 in the vicinity of the boundary between two adjacent recording heads. In these figures, with a pixel shown by ◇, the recording dot is formed by the first ink discharge. In the recording dot corresponding to pixel shown by ○, further the second ink discharge is also performed to increase the density of the recording dots. In the recording dot corresponding to the pixel shown by □, further the third ink discharge is also performed to further increase the density of the recording dots, and the recording dots are formed in a maximum density.

When the first counter 1413 outputs 1, the binarization section 1404 produces the 2-gradation image in which the pixel for performing the ink discharge once or more is set to 1. Therefore, as shown in FIG. 16A, the 2-gradation image including the pixel of 1 is prepared as shown by ◇. Since the first counter 1413 outputs 1, a dividing line shape 1601(a) stored in the first dividing line shape storage section 1412(a) is read in the dividing line shape selection section 1414, and the 2-gradation image is divided along the dividing line shape 1601(a) in the image dividing section 1406.

Similarly, when the first counter 1413 outputs 2, the binarization section 1404 produces the 2-gradation image in which the pixel for performing the ink discharge twice or more is set to 1. Therefore, as shown in FIG. 16B, the binary image including the pixel of 1 is prepared as shown by ○. Since the first counter 1413 outputs 2, a dividing line shape 1601(b) stored in the second dividing line shape storage section 1412(b) is read in the dividing line shape selection section 1414, and the 2-gradation image is divided along the dividing line shape 1601(b) in the image dividing section 1406. Further similarly, when the first counter 1413 outputs 3, the binarization section 1404 produces the 2-gradation image in which the pixel for performing the ink discharge three times is set to 1. Therefore, as shown in FIG. 16C, the binary image including the pixel of 1 is prepared as shown by □.

Since the first counter 1413 outputs 3, a dividing line shape 1601(c) stored in the third dividing line shape storage section 1412(c) is read in the dividing line shape selection section 1414, and the 2-gradation image is divided along the dividing line shape 1601(c) in the image dividing section 1406.

In the embodiments of the present invention, since four stages of density gradation representations are performed for each recording dot, the gradation conversion section 1402, 4-gradation image memory 1403, first counter 1413, second counter 1415 and the like are adapted to the 4-gradation image, but the present invention is not limited to four stages of density gradation representations, and is applicable to an image recording apparatus which performs optional density gradation representation such as eight gradations.

Four embodiments have been described above, but, needless to say, modifications in the scope of the present invention are also included in the present invention. When geometric correction of the image data described in Jpn. Pat. Appln. KOKAI Publication No. 2000-168109 or the like is used, distortion of the image can be corrected to further enhance the image quality.

### Industrial Applicability

According to the present invention, since a dividing line shape generation section produces a dividing line shape having an inconspicuous joint by dividing/attaching of images, the image is accordingly divided, further subjected to density unevenness correction, and printed, so that image quality degradation by a conspicuous joint of the image can be avoided. Since a plurality of inexpensive recording heads each having a small recording length are used, and a trouble required for adjusting an attaching position of the recording head is saved, cost of an image recording apparatus can be reduced.

Moreover, since the dividing line shape is regular, a capacity or program of a storage device required in the dividing line shape generation section can be reduced.

Furthermore, since the dividing line shape is irregular, the joint of the formed image is more inconspicuous.

Additionally, even when the density is higher or lower than a predetermined density in the joint of the formed image, the density smoothly changes, and therefore the joint is more inconspicuous.

Moreover, even when a deviation is caused in a recording timing between two adjacent heads in the joint of the formed image, an area of a non-printed portion generated between lines can be reduced, and image quality can be inhibited from being degraded.

Furthermore, since the dividing line shape generation section includes a storage device to store dividing line shape data, the dividing line shape data is prepared beforehand, and accordingly even a complicated shape is also usable.

Additionally, since the dividing line shape data is rewritable, the shape can be rewritten into a dividing line shape suitable for conditions even in cases where recording conditions change such as a case where a recording medium having new characteristics is used.

Moreover, the dividing line shape is produced by a function or program requiring only a comparatively small storage capacity. Therefore, even when large dividing line shape data is used without any repetition, a large storage device for storing all the data is not required, the apparatus can be simplified, and the cost can be reduced.

Furthermore, since the dividing line shape differs with each color, the joint of the formed image is more inconspicuous.

Additionally, since dividing positions of image data do not match one another between the colors in all the lines, the joint of the formed image is more inconspicuous.

Moreover, the dividing line shape can be selected and used from a plurality of shapes. Therefore, even when recording conditions change, it is possible to select and use the dividing line shape in which the joint of the formed image is most inconspicuous.

Furthermore, since the dividing line shape data is selected and used in accordance with the type of the input image, the joint can be set to be inconspicuous using appropriate dividing line shape data with respect to any input image.

Additionally, since the dividing line shape data is selected and used in accordance with a type of ink for use, the joint can be set to be inconspicuous using appropriate dividing line shape data with respect to any ink.

Moreover, since the dividing line shape data is selected and used in accordance with a type of a recording medium for use, the joint can be set to be inconspicuous using appropriate dividing line shape data with respect to any recording medium.

Furthermore, since the dividing line shape data is selected and used in accordance with an image recording speed, the joint can be set to be inconspicuous using appropriate dividing line shape data with respect to any image recording speed.

Additionally, since the unevenness of the density generated in the joint of the formed image is corrected in the joint causing the density unevenness, a density distribution of an original image can be more faithfully reproduced.

Moreover, the unevenness of the density generated in the joint of the formed image is corrected based on a phase difference of a recording device between two adjacent recording heads causing the density unevenness. Therefore, when a relation between the phase difference and a density unevenness correction amount is checked beforehand, the density of the image does not have to be measured for each recording apparatus.

Furthermore, since a detection section is disposed to detect the phase difference of the recording device between two adjacent heads, the detection section to detect the phase difference of the recording device is not required except the image recording apparatus of the present invention, and the density unevenness generated in the joint of the formed image can be corrected.

Additionally, since the joint of the formed image differs with the number of ink discharges, the joint of a multivalued recording image can be inconspicuous.

Moreover, since a printing section for printing a test pattern for density unevenness correction measurement, a reading section for reading the density of the test pattern, and a calculation section for calculating a density unevenness correction amount based on the read density are disposed, the density unevenness can be corrected only by the image recording apparatus of the present invention.

Furthermore, when the image data described in Jpn. Pat. Appln. KOKAI Publication No. 2000-168109 is subjected to geometric correction or the like, the image quality can further be enhanced.

## Claims

1. An image recording apparatus comprising:
a dividing line shape data generation section which produces dividing line shape data to divide input image data into a plurality of partial images;
an image dividing section which divides the image data into a plurality of partial images based on the dividing line shape data produced in the dividing line shape data generation section;
a density unevenness correction section which corrects density of the image data corresponding to divided portions produced by a dividing process in the image dividing section; and
a recording section comprising a plurality of recording heads to record the respective partial images divided in the image dividing section.

2. The image recording apparatus according to claim 1, wherein the dividing line shape data output from the dividing line shape data generation section has a shape obtained by regularly moving a dividing position of the image data every line or every plurality of lines.

3. The image recording apparatus according to claim 1, wherein the dividing line shape data output from the dividing line shape data generation section has a shape obtained by irregularly moving a dividing position of the image data every line or every plurality of lines.

4. The image recording apparatus according to claim 2 or 3, wherein distribution of the dividing positions of the image data has a large distribution in a middle of a distribution range.

5. The image recording apparatus according to claim 2 or 3, wherein a maximum value of a difference of a line direction of the dividing position of the image data between adjacent lines is set to be not more than a predetermined value which is smaller than a width of a distribution range of the dividing positions of the image data.

6. The image recording apparatus according to claim 1, wherein the dividing line shape data generation section includes a storage device capable of storing the dividing line shape data.

7. The image recording apparatus according to claim 6, wherein the storage device is capable of rewriting the data.

8. The image recording apparatus according to claim 1, wherein the dividing line shape data generation section produces the dividing line shape data by a function or program.

9. The image recording apparatus according to claim 1, wherein the recording section records data in multiple colors, and the dividing line shape data generation section produces the dividing line shape data which differs with each color.

10. The image recording apparatus according to claim 9, wherein the dividing line shape data is produced in such a manner that the dividing positions of the image data are not matched between colors in all lines.

11. The image recording apparatus according to claim 1, wherein the dividing line shape data generation section is capable of producing a plurality of different dividing line shape data, and comprises a dividing line shape data selection section to select the produced dividing line shape data.

12. The image recording apparatus according to claim 11, wherein the dividing line shape data selection section selects the dividing line shape data in accordance with a type of an input image.

13. The image recording apparatus according to claim 11, wherein the dividing line shape data selection section selects the dividing line shape data in accordance with a type of ink for use.

14. The image recording apparatus according to claim 11, wherein the dividing line shape data selection section selects the dividing line shape data in accordance with a type of a recording medium for use.

15. The image recording apparatus according to claim 11, wherein the dividing line shape data selection section selects the dividing line shape data in accordance with an image recording speed.

16. The image recording apparatus according to claim 1, wherein the density unevenness correction section controls on/off of a recording dot existing in a position contacting a dividing line to correct density unevenness of an image generated in a position corresponding to a joint of the recording heads so that a uniform density is obtained.

17. The image recording apparatus according to claim 1, wherein the density unevenness correction section includes a density unevenness correction amount storage section in which a correction amount of a density unevenness of an image generated in a position corresponding to a joint of the recording head is stored for various values of a phase difference of a recording device between two adjacent recording heads, refers to the correction amount stored in the density unevenness correction amount storage section, and acquires a density correction amount in accordance with an actually obtained phase difference to correct the density unevenness.

18. The image recording apparatus according to claim 17, further comprising: a phase difference detection section which detects the phase difference of the recording device between two adjacent recording heads.

19. An image recording apparatus which controls the number of ink drops for use in forming recording dots so that gradation representation is possible for each recording dot, comprising:
an image data storage section in which an image of each ink drop discharge for the gradation representation is stored;
an image dividing line shape data storage section in which a plurality of different image dividing line shape data are stored;
an image dividing line shape data selection section which selects one of the image dividing line shape data stored in the image dividing line shape data storage section in accordance with the number of image drops for the image stored in the image data storage section during the forming of the recording dots;
an image dividing section which divides image data stored in the image data storage section by the number of recording heads in accordance with the selected image dividing line shape data; and
a recording section comprising a plurality of recording heads to record the image data divided in the image dividing section.

20. The image recording apparatus according to any of claims 1 to 16, further comprising:
a printing section which prints a test pattern for density unevenness correction measurement;
a reading section which reads density of the test pattern printed in the printing section; and
a calculation section which calculates density unevenness correction amount based on the density of the test pattern read in the reading section.
